# EUROPÄISCHE PATENTSCHRIFT

(11) **EP 2 064 160 B1**
(45) Veröffentlichungstag und Bekanntmachung des Hinweises auf die Patenterteilung: **17.04.2019**
(21) Anmeldenummer: 07722314.7
(22) Anmeldetag: 27.04.2007
(51) Int. Cl.: C04B 18/28, C04B 18/26, C04B 20/10, C04B 28/02, C04B 111/40, C04B 111/52

(54) **LIGNOCELLULOSISCHER ZUSCHLAGSTOFF UND VERFAHREN ZU SEINER HERSTELLUNG**
LIGNOCELLULOSE ADDITIVE AND METHOD FOR PRODUCING IT
GRANULAT LIGNOCELLULOSIQUE ET SON PROCÉDÉ DE FABRICATION

(30) Priorität: 03.05.2006 DE 102006020761
(43) Veröffentlichungstag der Anmeldung: 03.06.2009
(73) Patentinhaber: Borkowski, Martin, 45891 Gelsenkirchen (DE); Körning, Hans-Otto, 45879 Gelsenkirchen (DE)
(72) Erfinder: Borkowski, Martin, 45891 Gelsenkirchen (DE); Körning, Hans-Otto, 45879 Gelsenkirchen (DE)
(74) Vertreter: Auerbach, Bettina
(86) Internationale Anmeldenummer: PCT/DE2007/000757
(87) Internationale Veröffentlichungsnummer: WO 2007/124727

(56) Entgegenhaltungen:
- EP-A- 0 735 162
- EP-A- 1 108 696
- WO-A-93/09943
- DE-U1- 29 922 155
- FR-A- 863 626
- US-A- 1 762 267
- US-A- 5 019 170

## Beschreibung

Die Erfindung betrifft einen Verfahren zur Herstellung eines lignocellulosischen Zuschlagstoffs auf der Basis von spanartigem Aufbereitungsgut aus Holz, Schäben und/oder
Halmpflanzenteilen mit einer mineralischen Ummantelung und den nach dem Verfahren hergestellten lignocellulosischer Zuschlagstoff.

In bereits bekannten Anwendungen von Holzspänen als Zuschlagstoff werden die Holzspäne mit Wasser und Zement sowie mit weiteren Zusätzen gleichzeitig verarbeitet. Je nach Beanspruchung kann dabei das Verhältnis von Holzspänen zu Zement als dem bevorzugten Bindemittel in weiten Grenzen variieren.
Im Gegensatz zu anderen Zuschlagstoffen enthalten alle Hölzer mehr oder weniger große Anteile die Abbindung des Zementes mitunter stark verzögernde Substanzen. Hinzu kommt die Anfälligkeit der Holzspäne gegenüber dem Befall durch Mikroorganismen. Deshalb sind bereits Vorschläge entwickelt worden, mit deren Hilfe sowohl die Mineralisierung als auch die biozide Ausstattung der einzusetzenden Holzspäne erreicht werden soll. So beschreibt die DE 27 15 533 A1 ein Verfahren zur Herstellung von Holzbeton, bei dem als Mineralisierungssubstanzen als Zusatzmittel zum hydraulischen Bindemittel Erdalkalioxide bzw. -hydroxide zum Einsatz kommen. Ein weiterer Verfahrensvorschlag wird in der DE 19 13 939 A1 unterbreitet. Er sieht den Einsatz eines Mineralisierungsmittels für Holz zur Erzeugung von Holzbeton vor. Als bevorzugte Mineralisierungsmittel werden hierbei Ameisensäure oder Formiate der Alkalien, Erdalkalien bzw. des Ammoniums vorgeschlagen.

Ebenfalls der Mineralisierung und der Konservierung von Holzspänen für die Verwendung in Holzbeton dient ein
Verfahrensvorschlag der mit der DE 2435 105 A1 bekannt gemacht wurde. Er sieht die Zugabe von aktiviertem Schwefel zur Holzbetonrohmasse vor, wobei zur Aktivierung des Schwefels bevorzugt Metalloxide und Metallhydroxide sowie sauer reagierende Salze verwendet werden.
Die Nachteile der vorgenannten bekannten technischen Lösungen bestehen insbesondere darin, dass die einzusetzenden Holzspäne in einem einstufigen Prozess sowohl mit den Konservierungs- als auch mit den Mineralisierungs- und mit den Bindemitteln sowie mit dem Anmachwasser vermischt werden.
Dies bedingt ein mehr oder weniger großes Schwinden des erzeugten Holzbetons, verhältnismäßig lange Abbindezeiten sowie einen zu vermeidenden Eintrag von Wasser in den Baukörper.
In der DE 29922 155 U1 wird eine Dämmplatte beschrieben, welche als Füllstoff vorzugsweise Hanfschäben aber auch Waldholzschnitzel enthält, welche eine Länge von 5 bis 40 mm bevorzugt aufweisen. Der
Zuschlagstoff, welche zu diesen Waldholzschnitzeln oder Hanfschäben zusätzlich 5 bis 30 Gew. % Dolomitmehl zugemischt wird, dient als lose Füllung in der Dämmplatte. Das Gesteinsmehl zieht nach dem Zuordnen der Mischung und Formgebung als Dämmplatte die Restfeuchte aus dem Holz und härtet aus. Es entsteht ein fester Verbund zwischen den Schäben und dem Gesteinsmehl. Dass dabei auch partiell an den Schäben eine Schicht gebildet wird, bleibt dem Zufall bzw. dem zufälligen Anteil an Restfeuchte in der Schäbe und dem zufällig dort naheliegendem Gesteinsmehl innerhalb der Dämmplatte überlassen. Es wird zudem darauf hingewiesen, dass die Schäben einen Teil an Fasern noch aufweisen sollen, um die Raumstruktur der Füllung zu optimieren.
Die Größe der Hanfschäben oder Waldholzschnitzel dient lediglich der Dimensionierung und Handhabbarkeit als Schüttung zum
Einbringen in die Dämmplatte und es ist davon die Rede, dass die Hanfschäben als Abfallprodukt vorzugsweise in dieser Länge vorliegen. Es wurde kein Hinweis darauf gefunden, die Größe der Schäben mit einer Ummantelung des Gesteinsmehls im Zusammenhang gebracht wird.

Es geht lediglich darum, diese zusammen mit dem Gesteinsmehl in der Dämmplatte anordnen zu können.
Der Nachteil dieser Lösung besteht vor allem in der Vernachlässigung der fäulnishemmenden Imprägnierung der als Schüttgut eingebachten Faseranteile in die Dämmplatte, um die ohnehin mit Faseranteilen behafteten Schnitzel als Schüttgut gehandhabt werden können.
In der US-A-1 762 267 wird bereits ein Zuschlagstoff beschrieben, bei dem die einzelnen zuvor in Wasser getränkten Holzstückchen einen trockenen Mantel aus Gips, Kalk oder Zement aufweisen, welcher durch das Aufsaugen des in den Holzstückchen enthaltenen Wassers hydratisiert. Zur Trocknung und Karbonisierung wird der Zuschlagstoff 12 h lang ausgebreitet. Durch nachträgliche Zugabe von wasserabweisenden Mitteln kann der Zuschlagstoff hydrophobisiert werden.
Es wird zwar ein Schüttgut hergestellt, was aus einem Holzstück und einem Mantel aus ausgehärtetem Gips, Kalk oder Zement besteht, jedoch ist die Qualität des ausgehärteten Mantels auf den Zufall beruhend, dass das getränkte Holzstück umfassend mit dem Bindemittel ausgestattet sein muss, um ein nachträgliches Hineindringen von Wasser in den Holzkern zu vermeiden. Ein weiterer Nachteil dieser Lösung besteht auch in der
Vernachlässigung der fäulnishemmenden Imprägnierung der als Zuschlagstoffbasis eingebachten Holzstücke. Dieser Nachteil ist umso schwerwiegender, als dass die umfassende Ummantelung des Holzkerns nicht gewährleistet ist. Die Zeit des Haushärteprozesses spielt dabei eine untergeordnete Rolle und dient dem Erhalt der Schüttfähigkeit. Wichtiger ist die Ummantelungsqualität, welche mit den beschriebenen Aufbereitungsschritten nicht gewährleistet werden kann.
In der FR 863 626 A wird zwar auf die fäulnishemmende Imprägnierung geachtet und die Holzschnitzel, aus welchen der Zuschlagstoff gebildet wird, werden mit einer CaCL2-Salzlösung getränkt, bevor Kalziumcarbonat pulverförmig zugemischt wird. Da jedoch CaCl2 als Bindemittelbeschleuniger wirkt, kommt es zu einem schnellen Entzug der zuvor in die Holzschnitzel einbebrachten Salzlösung und nicht nur des in der Lösung enthaltenen H₂0, um für den Abbindeprozess zur Verfügung zu stehen. Es wird dadurch die gewünschte Imprägnierwirkung reaktiviert bzw. minimiert.

Außerdem kann auch hier nicht garantiert werden, dass es zu einer vollständigen Ummantelung der einzelnen Holzstücke kommt. Dies ist jedoch Voraussetzung für eine Zulassung als Zuschlagstoff in der Baumaterialienindustrie. Liegt keine vollständige Ummantelung vor, kann es nachträglich zu einem Feuchtigkeitseintrag in die betreffenden Holzstücke kommen und ein Fäulnisprozess aber auch ein Quellprozess kann die daraus gebildete Baustruktur qualitativ negativ beeinflussen und auch zerstören.
In der EP A 0735 162 wird die Möglichkeit beschrieben, holzbefreite Pflanzenfasern als Kern eines Zuschlagstoffs einzusetzen.
Dies setzt jedoch einen sehr hohen zusätzlichen technischen Auswand voraus, um aus Holz oder Pflanzen einen Zuschlagstoff zu schaffen.
Um eine mineralisierte Ummantelung zu erhalten, wird in der WO 93109943 A Kaolin als Material eingesetzt. Dies bewirkt zwar eine verbesserte Resistenz gegen chemische Angriffe des Produktes und verringert die Wasseraufnahme, schließt diese jedoch nicht restlos aus, was zu einer Destabilisierung des Zuschlagstoffes führen würde. Bei Einsatz von Holzspänen ist dies jedoch eine wesentliche Voraussetzung.
Die Aufgabe der Erfindung besteht deshalb im Schaffen einer technischen Lösung, mit deren Hilfe die Mängel des bekannten Standes der Technik überwunden werden. Die Vorteile des Einsatzes des nachwachsenden Zuschlagstoffes Holzspäne sollen in vollem Umfang genutzt werden können, ohne die mit den bisherigen Lösungen verbunden Nachteile in Kauf nehmen zu müssen. Die zu entwickelnde fortschrittliche Lösung soll mit einfachen Mitteln und kostengünstig realisiert werden können und eine große Variabilität des Einsatzes von lignocellulosischen Spänen in Baukonstruktionen
ermöglichen.

Die Aufgabe wird erfindungsgemäß durch die Merkmale der Ansprüche 1 und 7 gelöst, wobei bevorzugte Ausgestaltungen in den Unteransprüchen beschrieben sind.

Danach besteht ein lignocellulosischer Zuschlagstoff aus spanartigem Aufbereitungsgut aus Holz, Schäben und/oder Halmpflanzenteilen, dass mit einer Ummantelung ausgestattet ist. Die einzelnen Elemente des Zuschlagstoffs bestehen dabei aus einem lignocellulosischem Kern und einer Ummantelung aus ausgehärteten mineralischen Bindemittel. Der Kern eines einzelnen Elementes des Zuschlagstoffes besteht aus lignocellulosischen Spanteilen mit einem Durchmesser zwischen 2 mm und 10 mm und einer Länge zwischen 2mm und 50 mm. Der lignocellulosische Kern des Einzelelementes des Zuschlagstoffs ist mit einer Salzfracht ausgestattet, wobei diese aus Calcium-, Magnesium- und/oder Natriumcarbonat besteht. Hingegen besteht das Bindemittel der mineralischen Ummantelung aus Dolomit, Kalk und/oder Zement. Die Oberfläche der einzelnen Elemente des Zuschlagstoffs ist hydrophob ausgestattet, wobei die eingesetzten Hydrophobierungsmittel modifizierte reaktive Siloxane sind. Derartig beschaffene lignocellulosische Zuschlagstoffe besitzen alle wesentlichen Vorzüge von bautechnisch verwertbaren Einsatzstoffen aus dem regenerativen Rohstoff Biomasse. Sie sind leicht, verleihen dem damit hergestellten Baustoff in besonderer Weise Wärme- und den Schall dämmende Eigenschaften und regulieren in hervorragender Weise den Feuchtehaushalt sowohl im Bauszoff selbst als auch in den mit diesem Baustoff ausgestatteten Räumen. Während organische Baustoffe in bekannter Weise im erhöhten Maße einer Funktionsbeeinträchtigung infolge Schädlingsbefall unterliegen, erfordern sie außerdem wegen des großen Feuchtespeichervermögens verlängerte Trocknungszeiten im Falle ihres unmittelbaren Einsatzes auf der Baustelle. Die neugeschaffene technische Lösung ermöglicht es, auf überraschend einfache Weise die Nachteile des Einsatzes biogener Baustoffe zu vermeiden, ohne die bekannten Vorzüge preis zu geben.
Dies wird erreicht, indem die biogenen Einsatzstoffe in einem vorgeschalteten Prozessschritt außerhalb der Baustelle mit Konservierungsmitteln gegen den Schädlingsbefall ausgestattet werden und in diesem Zusammenhang gleichzeitig eine mineralische Oberfläche erhalten.

Weil die mineralische Oberfläche als Ummantelung jedes Einzelelementes des vorschlagsgemäß hergestellten Zuschlagstoffs ausgeführt ist, kann bei einer nachfolgenden Verarbeitung unter Einsatz von wässrigen Substanzen die erneute Aufnahme wesentlicher Feuchteanteile durch den lignocellulosischen Kern der Einzelelemente des Zuschlagstoffs sicher vermieden werden. Dieser Effekt wird durch den Einsatz von Hydrophobierungsmitteln auf der Oberfläche der Ummantelung der Einzelelemente des Zuschlagstoffs noch unterstützt. Durch gezielte Einstellung des Feuchtezusatzes beim Aufbringen der mineralischen Ummantelung der Einzelelemente des Zuschlagstoffs werden zudem aus dem Kern des Zuschlagstoffelementes Restfeuchtegehalte entzogen.
Das Verfahren zur Herstellung des lignocellulosischen Zuschlagstoffs auf der Basis von spanartigem Aufbereitungsgut aus Holz, Schäben und/oder Halmpflanzenteilen, dass mit einer mineralischen Ummantelung ausgestattet ist, sieht vor, dass zunächst eine Spanfraktion aus lignocellulosischem Einsatzgut in Form von Fasern im Längenbereich zwischen 2 mm und 50 mm gebildet wird. Hierfür wird bevorzugt Zerspanungs- und Fraktionierungstechnik eingesetzt. Anfallende Fein- und Grobfraktionen werden zielgerichtet aus dem Prozess ausgeschieden. Danach wird die für den Einsatz vorbereitete Spanfraktion mit einem salzhaltigen wässrigen Medium getränkt. Dabei dringen gelöste Teile des salzigen Additivs mit dem Mischwasser wenigstens teilweise konservierend in die Zellstruktur der eingesetzten Späne ein. Anschließend werden die mit Additiven getränkten Späne mit etwa 50% einer stabilisierenden Menge hydraulischer Bindemittel vermischt. Hierbei wird eine aushärtende Ummantelung der Einzelspäne bei gleichzeitigem Entzug des in den Zellen des lignocellulosischem Kern der Einzelelemente gespeicherten Mischwassers bewirkt. Danach wird die verbliebene stabilisierende Bindemittelmenge mit einer hydrophobierenden Mittel vermischt und diese Mischung dem bereits ummanteltem Spangut zugesetzt. Schließlich wird das ummantelte Spangut unter Aufrechterhaltung der Schüttguteigenschaft des Zuschlagstoffs einem Abbindeprozess unterworfen. Das zur Konservierung des lignocellulosischen Kerns der Einzelelemente des Zuschlagstoffs eingesetzte wässrige Medium wird aus magnesium-, calcium- und/oder sodahaltigen Einsatzstoffen und Wasser gewonnen.

Die Additive werden dem wässrigen Medium im Verhältnis von 10 bis 19 Masseteilen Calciumcarbonat und 1 bis 10 Masseteilen Natriumcarbonat zugesetzt. Die Additive werden dabei wenigstens teilweise im Mischwasser ausgelöst. Das schließlich ummantelte Spangut wird während der Aushärtung bewegt und belüftet. Es ist auch möglich, die erforderliche Bewegung des Spangutes während der Aushärtung der Ummantelung auf einem Bandförderer bei gleichzeitigem Eintrag von Vibrationsenergie vorzunehmen. Bevorzugt wird das mineralisierte und hydrophobierte Spangut für weitere Anwendungen zwischengelagert, ohne wegen der zuvor erfolgten Aushärtung des Bindemittels der Ummantelung der Einzelelemente des Zuschlagstoffs seine Schüttguteigenschaften zu verlieren.
Anschließend kann die weitere Anwendung des derartig hergestellten Zuschlagstoffs in Form einer losen Schüttung für Zwecke der Wärme- und/oder Trittschalldämmung vorgesehen werden. Es ist auch möglich, den Zuschlagstoff in leichten und/oder wärmedämmenden Leichtbetonkonstruktionen einzusetzen.

Die Vorteile der Erfindung bestehen zusammengefasst in der nun verfügbaren technischen Lösung, mit deren Hilfe im erweiterten Maße biogenes Material unter Nutzung all seiner Vorteile in Baukonstruktionen zum Einsatz zu bringen. Während die bereits benannten Vorzüge solcher Einsatzstoffe uneingeschränkt nutzbar gemacht werden, gewährleistet die Erfindung nunmehr den sicheren Ausschluss bisheriger Nachteile des Einsatzes von biogenen Baumaterialien. So lassen sich lose, leicht verfestigte und abgebundene Schüttungen für das Erreichen einer hohen Wärme- und/oder Trittschalldämmung in Hohlräumen, unter Fußbodenaufbauten und in Wandkonstruktionen einsetzen. Darüber hinaus sind jegliche Zuschlagstoffanwendungen in leichten und schweren Betonkonstruktionen realisierbar. Das betrifft sowohl die Vorfertigung von Bauelementen als auch die Anwendung in monolithischen Konstruktionen.

Die Erfindung soll nachstehend mit einem Ausführungsbeispiel näher erläutert werden.

### Ausführungsbeispiel:

Ein Zuschlagstoff aus Einzelelementen mit einem Kern aus lignocellulosischem Material und einer mineralischen Ummantelung für den späteren Einsatz als wärme- und trittschalldämmende Schüttung wird dadurch gewonnen, dass für die Herstellung von 1 m³ Zuschlagstoff zwischen 80 kg und 260 kg trockene Späne aus Nadelholz mit einem Durchmesser zwischen 5 mm und 8 mm und einer Länge zwischen 4 mm und 50 mm eingesetzt werden. Weiterhin erfolgt der Einsatz von 150 kg bis 750 kg Portlandzement. Außerdem werden als Mineralisierer zwischen 10 kg und 25 kg teilweise calcinierter Dolomit, Kohlensäurekalk oder Weißkalk zugesetzt. Als konservierendes Salz wird dem Anmachwasser zwischen 5 kg und 12 kg Soda zugegeben. Als Hydrophobierer werden zwischen 0,1 % und 2 %, bezogen auf die gesamte Zementmenge, einer wässrigen Emulsion auf Basis modifizierter reaktiver Siloxane sowie zwischen 100 1 und 150 1 Anmachwasser eingesetzt.
Zunächst wird das vorgesehene Anmachwasser mit der angegebenen Salzmenge gemischt, wobei das eingesetzte Salz weitestgehend aufgelöst wird. Danach erfolgt das Tränken der vorbereiteten fraktionierten Späne mit dieser Salzlösung. Anschließend wird etwa die Hälfte der rezeptierten Bindemittelmenge mit den feuchten Spänen vermischt, wobei es unter gleichzeitigem Entzug des von den Spänen aufgenommenen Anmachwassers zu einem hydraulischen Abbinden des eingesetzten Bindemittels bei Ausbildung einer vollständigen mineralischen Ummantelung der Einzelspäne des Zuschlagstoffes kommt. Parallel hierzu wird die verbleibende Bindemittelmenge mit dem ausgewählten Hydrophobierer vermischt und anschließend den mineralisierten Einzelelementen des Zuschlagstoffes zugegeben. Der Abbindeprozess erfolgt sodann bei stetiger Bewegung des Mischgutes, womit die Aufrechterhaltung der Schüttguteigenschaften des Mischgutes gewährleistet wird.

Es wird ein Zuschlagstoff aus mineralisierten Einzelelementen erhalten, die jeweils einen lignocellulosischen Kern und eine abgebundene Ummantelung aufweisen. Die Schüttgutdichte des Zuschlagstoffs erreicht Werte zwischen 0,4 und 0,8 kg/dm³.

## Patentansprüche

1. Verfahren zur Herstellung eines lignocellulosischen Zuschlagstoffs auf der Basis von spanartigem Aufbereitungsgut aus Holz, Schäben und/oder Halmpflanzenteilen, das mit einer mineralischen Ummantelung ausgestattet ist, **dadurch gekennzeichnet, dass** zunächst eine Spanfraktion aus lignozellulosischem Einsatzgut in Form von Fasern im Längenbereich zwischen 2 mm und 50 mm und mit einem Durchmesser zwischen 2 mm und 10 mm gebildet wird,
**dass** die für den Einsatz vorbereitete Spanfraktion mit einem salzhaltigen wässrigen Medium getränkt wird, das aus magnesium-, kalzium- und/oder sodahaltigen Einsatzstoffen und Wasser gewonnen wird, wobei die gelösten Teile des salzhaltigen Additivs mit dem Mischwasser wenigstens teilweise konservierend in die Zellstruktur der eingesetzten Späne eindringen,
**dass** die mit Additiven getränkten Späne mit etwa 50% einer stabilisierenden Menge hydraulischer Bindemittel vermischt werden und hierbei eine aushärtende Ummantelung der Einzelspäne bei gleichzeitigem Entzug des in den Zellen des lignocellulosischen Kerns der Einzelelemente gespeicherten Mischwassers bewirkt wird, wobei das Bindemittel der Ummantelung aus Dolomit, Kalk und/oder Zement besteht, **dass** die verbliebene stabilisierende Bindemittelmenge mit einem hydrophobierenden Mittel vermischt und diese Mischung dem bereits ummantelten Spangut zugesetzt wird und
**dass** das ummantelte Spangut unter Aufrechterhaltung der Schüttguteigenschaft des Zuschlagstoffs einem Abbindeprozess unterworfen wird.

2. Verfahren zur Herstellung eines lignocellulosischen Zuschlagstoffs nach dem Anspruch 1, **dadurch gekennzeichnet, dass** die Additive des wässrigen Mediums im Verhältnis von 10 bis 19 Masse-Teilen Calciumcarbonat und 1 bis 10 Masse-Teilen Natriumcarbonat zugesetzt werden.

3. Verfahren zur Herstellung eines lignocellulosischen Zuschlagstoffs nach einem der Ansprüche 1 bis 2, **dadurch gekennzeichnet, dass** die Additive wenigstens teilweise im Mischwasser aufgelöst werden.

4. Verfahren zur Herstellung eines lignocellulosischen Zuschlagstoffs nach einem der Ansprüche 1 bis 3, **dadurch gekennzeichnet, dass** das ummantelte Spangut während der Aushärtung bewegt und belüftet wird.

5. Verfahren zur Herstellung eines lignocellulosischen Zuschlagstoffs nach einem der Ansprüche 1 bis 4, **dadurch gekennzeichnet, dass** die Bewegung des Spangutes während der Aushärtung auf einem Bandförderer bei gleichzeitigem Eintrag von Vibrationsenergie erfolgt.

6. Verfahren zur Herstellung eines lignocellulosischen Zuschlagstoffs nach einem der Ansprüche 1 bis 5, **dadurch gekennzeichnet, dass** das mineralisierte und hydrophobierte Spangut für weitere Anwendungen zwischengelagert wird.

7. Lignocellulosischer Zuschlagstoff hergestellt nach dem Verfahren definiert im Anspruch 1, bestehend aus spanartigem Aufbereitungsgut aus Holz, Schäben und/oder Halmpflanzenteile, das mit einer Ummantelung ausgestattet ist, **dadurch gekennzeichnet,**
- **dass** die einzelnen Elemente des Zuschlagstoffs aus einem lignocellulosischem Kern und einer Ummantelung aus ausgehärtetem mineralischen Bindemittel bestehen,
**dass** der Kern eines Einzelelementes des Zuschlagstoffes aus lignocellulosischen Spanteilen mit einem Durchmesser zwischen 2 mm und 10 mm und einer Länge zwischen 2 mm und 50 mm besteht,
**dass** der lignocellulosische Kern des Einzelelementes des Zuschlagstoffes mit einer Salzfracht bestehend aus Kalzium-, Magnesium- und/oder Natriumkarbonat ausgestattet ist, dass das Bindemittel der mineralischen Ummantelung aus Dolomit, Kalk und/oder Zement besteht,
**dass** die Oberfläche der einzelnen Elemente des Zuschlagstoffs hydrophob ausgestattet ist.

8. Lignocellulosischer Zuschlagstoff nach dem Anspruch 7, **dadurch gekennzeichnet, dass** die zur hydrophoben Ausstattung der Oberfläche der einzelnen Elemente des Zuschlagstoffs eingesetzten Hydrophobierungsmittel modifizierte reaktive Siloxane sind.

## Claims

1. Method for producing a lignocellulosic aggregate on the basis of chip-like processing material which is made of wood, shives and/or parts of stalk plants and provided with a mineral coating, **characterized in that** a chip fraction is first formed from lignocellulosic feed material in the form of fibers in the length range of between 2 mm and 50 mm and having a diameter of between 2 mm and 10mm, **in that** the chip fraction prepared for use is impregnated with a saline aqueous medium that is obtained from magnesium-containing, calcium-containing and/or soda-containing feed materials and water, the dissolved parts of the saline additive at least partially permeating, together with the mixed water, into the cell structure of the chips used so as to preserve them, **in that** the chips impregnated with additives are mixed with approximately 50% of a stabilizing amount of hydraulic binding agent and this leads to a curing coating of the individual chips while the mixed water stored in the cells of the lignocellulosic core of the individual elements is simultaneously withdrawn, the binding agent of the coating consisting of dolomite, lime and/or cement, **in that** the remaining amount of stabilizing binding agent is mixed with a hydrophobing agent and this mixture is added to the chip material that is already coated, and **in that** the coated chip material is subjected to a setting process while maintaining the bulk material characteristics of the aggregate.

2. Method for producing a lignocellulosic aggregate according to claim 1, **characterized in that** the additives of the aqueous medium are added in a ratio of 10 to 19 parts by mass of calcium carbonate and 1 to 10 parts by mass of sodium carbonate.

3. Method for producing a lignocellulosic aggregate according to either claim 1 or claim 2, **characterized in that** the additives are at least partially dissolved in the mixed water.

4. Method for producing a lignocellulosic aggregate according to any of claims 1 to 3, **characterized in that** the coated chip material is moved and ventilated during curing.

5. Method for producing a lignocellulosic aggregate according to any of claims 1 to 4, **characterized in that**, during curing, the chip material is moved on a belt conveyor while vibration energy is simultaneously introduced.

6. Method for producing a lignocellulosic aggregate according to any of claims 1 to 5, **characterized in that** the mineralized and hydrophobized chip material is intermediately stored for further applications.

7. Lignocellulosic aggregate produced according to the method defined in claim 1, the aggregate consisting of chip-like processing material which is made of wood, shives and/or parts of stalk plants and being provided with a coating, **characterized in that** the individual elements of the aggregate consist of a lignocellulosic core and a coating made of cured mineral binding agent, **in that** the core of an individual element of the aggregate consists of lignocellulosic chip parts having a diameter of between 2 mm and 10 mm and a length of between 2 mm and 50 mm, **in that** the lignocellulosic core of the individual element of the aggregate is provided with a salt load consisting of calcium carbonate, magnesium carbonate and/or sodium carbonate, **in that** the binding agent of the mineral coating consists of dolomite, lime and/or cement, and **in that** the surface of the individual elements of the aggregate is hydrophobic.

8. Lignocellulosic aggregate according to claim 7, **characterized in that** the hydrophobing agents used to hydrophobize the surface of the individual elements of the aggregate are modified reactive siloxanes.

## Revendications

1. Procédé de fabrication d'un agrégat ligno-cellulosique à base de produit de traitement du bois, d'écorces et/ou de parties de plantes à tiges sous forme de copeaux et pourvu d'une enveloppe minérale, **caractérisé en ce qu'**une fraction de copeaux de matière première ligno-cellulosique est tout d'abord formée sous forme de fibres dans une plage de longueur comprise entre 2 mm et 50 mm et avec un diamètre compris entre 2 mm et 10 mm, **en ce que** la fraction de copeaux préparée pour être utilisée est imprégnée d'un milieu aqueux contenant un sel, obtenu à partir d'ingrédients contenant du magnésium, du calcium et/ou de la soude, et d'eau, les parties dissoutes de l'additif contenant un sel pénétrant avec l'eau de mélange dans la structure cellulaire des copeaux utilisés en étant conservées au moins partiellement, **en ce que** les copeaux imprégnés d'additifs sont mélangés avec environ 50 % d'une quantité stabilisante de liant hydraulique, et qu'une enveloppe durcissable des copeaux individuels est ainsi produite lors de l'élimination simultanée de l'eau de mélange stockée dans les cellules du noyau ligno-cellulosique des éléments individuels, le liant de l'enveloppe étant constitué du dolomite, de chaux et/ou de ciment, **en ce que** la quantité résiduelle stabilisante de liant est mélangée avec un agent d'hydrophobisation et que ce mélange est ajouté aux copeaux déjà pourvus d'une enveloppe, et **en ce que** les copeaux pourvus d'une enveloppe sont soumis à un processus de prise tout en maintenant la propriété de matériau en vrac de l'agrégat.

2. Procédé de fabrication d'un agrégat ligno-cellulosique selon la revendication 1, **caractérisé en ce que** les additifs du milieu aqueux sont ajoutés dans un rapport situé dans la plage allant de 10 à 19 parties en masse de carbonate de calcium et de 1 à 10 parties en masse de carbonate de sodium.

3. Procédé de fabrication d'un agrégat ligno-cellulosique selon l'une des revendications 1 à 2, **caractérisé en ce que** les additifs sont au moins partiellement dissous dans l'eau de mélange.

4. Procédé de fabrication d'un agrégat ligno-cellulosique selon l'une des revendications 1 à 3, **caractérisé en ce que** les copeaux pourvus d'une enveloppe sont mis en mouvement et ventilés pendant le durcissement.

5. Procédé de fabrication d'un agrégat ligno-cellulosique selon l'une des revendications 1 à 4, **caractérisé en ce que** la mise en mouvement des copeaux pendant le durcissement s'effectue sur un convoyeur à bande avec application simultanée d'énergie vibratoire.

6. Procédé de fabrication d'un agrégat ligno-cellulosique selon l'une des revendications 1 à 5, **caractérisé en ce que** les copeaux minéralisés et hydrophobés sont stockés provisoirement pour d'autres applications.

7. Agrégat ligno-cellulosique fabriqué par le procédé selon la revendication 1, constitué d'un produit de traitement du bois, d'écorces et/ou de parties de plantes à tiges sous forme de copeaux et pourvu d'une enveloppe, **caractérisé en ce que** les éléments individuels de l'agrégat sont constitués d'un noyau ligno-cellulosique et d'une enveloppe en liant minéral durci, **en ce que** le noyau d'un élément individuel de l'agrégat est constitué de parties de copeaux ligno-cellulosiques d'un diamètre compris entre 2 mm et 10 mm et d'une longueur comprise entre 2 mm et 50 mm, **en ce que** le noyau ligno-cellulosique de l'élément individuel de l'agrégat est pourvu d'une charge saline constituée de carbonate de calcium, de carbonate de magnésium et/ou de carbonate de sodium, **en ce que** le liant de l'enveloppe minérale est constitué de dolomite, de chaux et/ou de ciment, **en ce que** la surface des éléments individuels de l'agrégat est rendue hydrophobe.

8. Agrégat ligno-cellulosique selon la revendication 7, **caractérisé en ce que** les agents d'hydrophobisation utilisés pour rendre hydrophobe la surface des éléments individuels de l'agrégat sont des siloxanes réactifs modifiés.
